Europäisches Patentamt

European Patent Office

Office européen des brevets

(19)

(11) Publication number: **0 226 239**
**A1**

(12) **EUROPEAN PATENT APPLICATION**

(21) Application number: **86202037.7**

(22) Date of filing: **17.11.86**

(51) Int. Cl.⁴: **G 08 B 13/24**

(30) Priority: **18.11.85 NL 8503167**

(43) Date of publication of application:
**24.06.87 Bulletin 87/26**

(84) Designated Contracting States:
**BE DE FR GB NL**

(71) Applicant: **N.V. Nederlandsche Apparatenfabriek NEDAP**
**Oude Winterswijkseweg 7**
**NL-7141 DE Groenlo(NL)**

(72) Inventor: **Fockens, Tallienco Wieand Harm**
**Reuvekamp 20**
**NL-7152 GV Eibergen(NL)**

(74) Representative: **Smulders, Theodorus A.H.J. et al,**
**Vereenigde Octrooibureaux Nieuwe Parklaan 107**
**NL-2587 BP 's-Gravenhage(NL)**

(54) Electromagnetic detection system of high sensitivity.

(57) An electromagnetic detection system of the field disturbance type, in particular suitable for use as an electronic anti-shop-lifting system. The system comprises a transmitter/receiver (10,40) including a transmitting/receiving circuit having a coil (20) for generating an interrogation field in a zone to be guarded, and a sweep signal generator (12) for periodically varying the frequency of the interrogation field within a pre-determined frequency range. The system further includes a plurality of detection plates (30) provided with at least one resonant circuit whose resonant frequency is within said frequency range. According to the invention the frequency tuning of the transmitting/receiving circuit is variable and means (24) are provided for causing the attunement of the transmitting/receiving circuit, in operation, to follow the varying frequency of the interrogation field in synchronism therewith.

FIG.2

EP 0 226 239 A1

Title: Electromagnetic detection system of high sensitivity

This invention relates to an electromagnetic detection system of the field disturbance type, in particular suitable for use as an electronic anti-shop-lifting sytem, comprising a transmitter/receiver, including a transmitting/ receiving circuit having a coil for generating an interrogation field in a zone to be guarded, and a sweep signal generator for periodically varying the frequency of the interrogation field within a pre-determined frequency range, the detection system further including a plurality of detection plates provided with at least one resonant circuit whose resonant frequency is within said frequency range.

Similar anti-shop-lifting systems are well-known and comprise a collection of detection plates, each of which contains at least one air-core coil, or a coil on a ferrite rod, and a capacitor. The capacitor is connected in parallel to the coil, and these components together form a resonant circuit.

Such anti-shop-lifting systems further comprise one or more electronic interrogation circuits, guarding one or more passage areas. An electronic interrogation circuit, referred to hereinafter as a transmitter/receiver will generate an alarm signal when a detection plate is detected in a passage area.

A detection plate applied to an article to be protected is removed when the article is sold and paid for. Now, if an article is removed from a shop without being paid for, a detection plate still attached to the article will pass the passage to be traversed to leave the shop, and thus be detected by the transmitter/receiver associated with said passage.

For this purpose, each transmitter/receiver generates an interrogation field in the associated passage, that is to say, an AC magnetic field with a frequency spectrum comprising the resonant frequency of the resonant circuit of the detection plates. In order to promote reliable detection of the detection plates, use is often made of an interrogation field whose frequency periodically sweeps between a maximum value and a minimum value. For this purpose the transmitting portion of a transmitter/receiver generates a high-frequency carrier wave which continuously sweeps in frequency (sometimes called 'wobbling'). The average frequency of the carrier wave may be, for example, 1800 kHz, while the frequency deviation may be, for example 300 kHz from top to top. In these systems the sweep frequency is relatively low and in this example is 130 Hz. The high-frequency carrier wave controls a transmitting/receiving coil disposed in the vicinity of a passage and forming an A.C. magnetic field in the spatial region of the passage. In case a letection plate passes the passage, the A.C. magnetic field induces an electromotive force (e.m.f.) in the coil of the detection plate. If the resonant frequency of the tuned circuit in the detection plate corresponds to the frequency of the A.C. magnetic field, the circuit will start resonating thereby withdrawing energy from the magnetic field. If the frequency of the A.C. field does not equal the resonant frequency, the circuit will not resonate and hence not absorb energy from the field.

Now, the resonant frequency of the detection plate is selected so that the frequency approximately coincides with the average frequency of the carrier wave supplied to the transmitting/receiving coil.

Accordingly, the detection plate will only absorb energy from the A.C. magnetic field at the moment when the sweeping carrier frequency passes the resonant frequency (the bandwidth, i.e. the resonance range of the resonant circuit in the plate is much smaller than the frequency sweep of the interrogation field). For most of the time, the carrier frequency falls outside the resonance range and no absorption takes place. The presence of a detection plate can accordingly be recognized from the fact that energy is absorbed from the A.C. magnetic field at a specific carrier frequency or, because the frequency sweep is periodical, from such absorption at specific moments.

As the carrier frequency sweeps over the resonant curve of the circuit in the detection plate in a continuous movement, the absorption, in time, has a variation corresponding to the shape of the resonant curve of the resonant circuit of a detection plate. This resonant curve is determined by the quality factor (Q factor) of the circuit and is equal to all detection plates associated with a system, except for production tolerances. Accordingly, after being converted into a video-frequency signal in the transmitter/receiver, the variation of the absorption in time provides a pulse signal whose shape corresponds to that of the resonance curve. This shape is accordingly also characteristic of the presence of a detection plate and can be used for recognition. Energy absorption by the detection plate from the A.C. magnetic field causes an extra supply of electrical energy from the transmitting/ receiving coil to the field, which can be electrically measured as, for example, a series loss resistance in the coil, which increases in the case of absorption. In order that this series loss resistance (Rs) may be measured, a series capacitor is provided in series with the transmitting/receiving coil, so that the capacitor and the transmitting/receiving coil with its series loss resistance form a series resonant circuit (the resonant transmitting circuit). At the resonant frequency of the resonant transmitting circuit, the series resistance is then measured as the (series) circuit impedance.

In the absence of a detection plate, the series loss resistance $Rs0$ equals the series loss

resistance R1 of the transmitting/receiving coil itself, in which also all other stationary loss factors from the direct surroundings of the coil are included. By means of the theory of electrical transformers, it can be deduced that the ratio between the series loss resistance Rs1 in the presence of a detection plate and Rs0 is given by $(Rs1/Rs0)=1 + K.Q1.K.Q2$ in which further:

K is the coupling factor between the transmitting/receiving coil and the coil in the detection plate

Q1 is the quality factor of the series circuit comprising the transmitting/receiving coil

Q2 is the quality factor of the resonant circuit in the detection plate.

This equation shows that, for maximum contrast with/without absorption, that is to say, for a maximum value of Rs1/Rs0, both Q1 and Q2 should be as high as possible. For the quality factor Q2 of the detection plate this is no problem. In fact a high Q2 gives a high oscillation in the resonant circuit and a narrow bandwidth. A narrow bandwidth is the very thing which is also desirable for a good recognizability of the energy absorption by the detection plate. In fact, the quality factor of the transmitting/receiving circuit is limited because the bandwidth of the resonance of the transmitting/receiving circuit should at least be so large as to include the total frequency sweep of the carrier wave. If the bandwidth should be narrower, the series circuit impedance rapidly increases beyond the resonance band, and after transformation to video-frequency signals, signals are formed with a pulse shape no longer distinguishable from the pulse shape resulting from the absorption by a detection plate. For good recognizability, therefore, Q1 should be low, whereas for maximum signal output, and hence maximum signal-to-noise ratio, Q1 should be as high as possible.

In the prior electronic anti-shop-lifting systems which operate by the absorption principle, or more generally by the field disturbance principle, a compromise is made to solve this dilemma in which, very often, Q1 is selected so that the bandwidth of the transmitting/receiving circuit just comprises the entire frequency sweep, i.e. in the above example: $Q1 = 1800 / 300 = 6$

It is an object of the present invention to provide a solution for the problem outlined, in which no compromise is needed in the choice of the quality factor of the resonant circuit of the transmitter/receiver, and yet both a good recognizability and a high signal-to-noise ratio are obtained.

For this purpose, according to the invention, an electromagnetic detection system of the above kind is characterized in that frequency tuning       of the transmitting/ receiving circuit is variable and that means are provided for causing the tuning     of the transmitting/receiving circuit, in operation, to follow the varying frequency of the interrogation field in synchronism therewith.

The invention will now be described in more detail with reference to the accompanying drawings.

Fig.1 diagrammatically shows a prior art electromagnetic detection system;

Fig. 2 diagrammatically shows a first embodiment of an electromagnetic detection system according to the present invention;

Fig.3 diagrammatically shows a second embodiment of a detection system according to the present invention;

Fig.4 shows a vector diagram of two signals occurring in an apparatus according to the present invention;

Fig.5 shows a variant of Fig.3; and

Fig.6 shows yet again a variant of Fig.5.

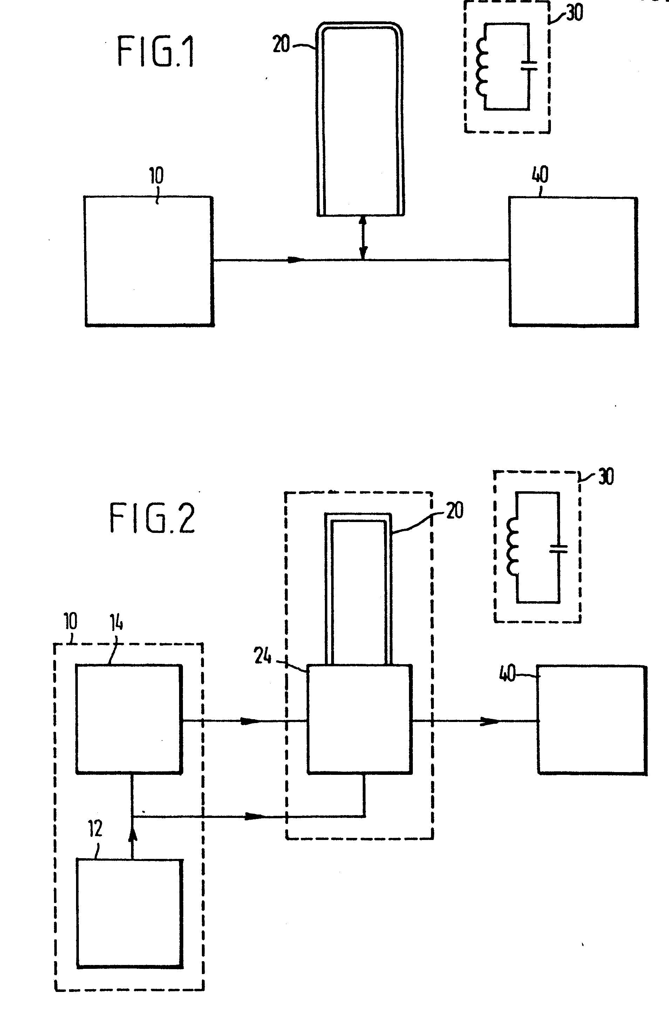

Fig. 1 diagrammatically shows a prior art electromagnetic detection system comprising a transmitter/receiver made up of a transmitter 20 and a receiver 40, both connected to a coil 20 serving as a transmitting/receiving coil and, as indicated hereinbefore, connected to a capacitor (not shown). By means of coil 20, a varying-frequency interrogation field can be generated in a zone to be guarded to detect any detection plates 30 that may be present in said zone. Each detection plate comprises, in the simplest embodiment, a resonant circuit built up from a coil L and a capacitor C, the resonance range of which circuit falls within the frequency range covered by the interrogation field.

It is noted that only one coil 20 is shown, but that a plurality of coils may be used and that the transmitting function and the receiving function need not be simultaneously performed by every coil.

As stated hereinbefore, in the prior art system, it is not possible to select the quality factor of the resonant circuit formed by coil 20 and the associated capacitor as high as possible, as would be desirable to obtain maximum contrast. This is a result of the fact that the resonance bandwidth of the transmitting/receiving circuit should cover the entire frequency range of the oscillating carrier frequency.

This problem is solved by the present invention by varying the frequency tuning of the transmitting/receiving circuit in synchronism with the varying transmission frequency, so that at any given moment the transmitting/receiving circuit is in resonance with the instantaneous transmission frequency. By virtue of this feature, the quality factor $Q1$ of the transmitting/receiving circuit can be selected as high as possible without any problem.

Fig. 2 shows this principle, elaborated in a block diagram. Transmitter 10 comprises, in known manner, a sweep voltage generator and a high-frequency oscillator controllable in frequency. The sweep voltage generator 12 generates a control voltage by means of which both the frequency of the high-frequency oscillator 14 and the resonant frequency of the transmitting/receiving circuit are varied by means of a controlling and tuning circuit 24. The controlling and tuning circuit is capable of varying the attunement of the transmitting/receiving coil 20 in any of the known manners suitable for the purpose. For this purpose, for example, an element can be used whose capacitance depends on a supplied control voltage.

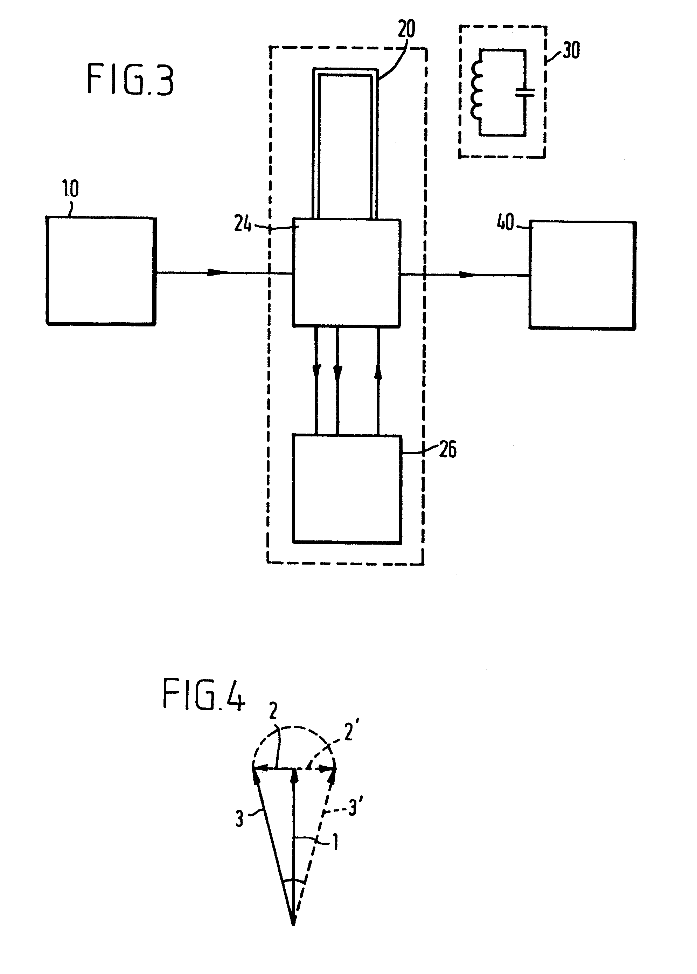

The block diagram of the accompanying Fig.2 shows a so-called forward control of the tuning frequency of the transmitting/receiving coil. An alternative (see Fig.3) is a feedback control, in which an auxiliary circuit 26 determines whether the transmitting/receiving circuit is in resonance for example by measuring the phase differential between the current in the circuit and the voltage across the circuit. By means of this, a control voltage can be generated and supplied to circuit 24, which adjusts the attunement in such a manner that the transmitting/receiving circuit becomes resonant at each carrier frequency. The advantage of feedback control over and above forward control is that ambient influences which may result in the transmitting/receiving circuit becoming detuned are automatically compensated for.

The frequency dependent energy absorption by the detection plate causes a (small) phase modulation between the voltage across, and the current within, the transmitting/receiving circuit. The voltage across the series impedance of the transmitting/receiving circuit can be regarded as the vectorial sum of the voltage generated by the transmitter and the voltage resulting from induction in the transmitting/receiving coil by the circuit current in the resonant circuit of the detection plate. As this circuit current is leading or trailing by 90° according as the carrier frequency is lower or higher than the resonance frequency, the small vector of the induced voltage will swing 180° relative to the vector of the transmitted signal at the moment when the carrier frequency passes the resonance frequency of the detection plates. The result is that the resulting vector makes a small phase sweep when the carrier wave frequency passes the resonance frequency of the detection plate.

Fig.4 shows the vector diagram, in which 1 is the vector representing the transmitter signal, 2 the vector representing the induced voltage resulting from the circuit current in the detection plate and 3 the resulting vector. It is clear that, if vector 2 makes a large phase sweep and occupies the position 2' indicated in dotted lines, this results in a small phase sweep of the resultant 3 to position 3'. This phase modulation is necessarily also detected in the phase measuring circuit supplying the control voltage to adjust the tuning of the transmitting/receiving circuit.

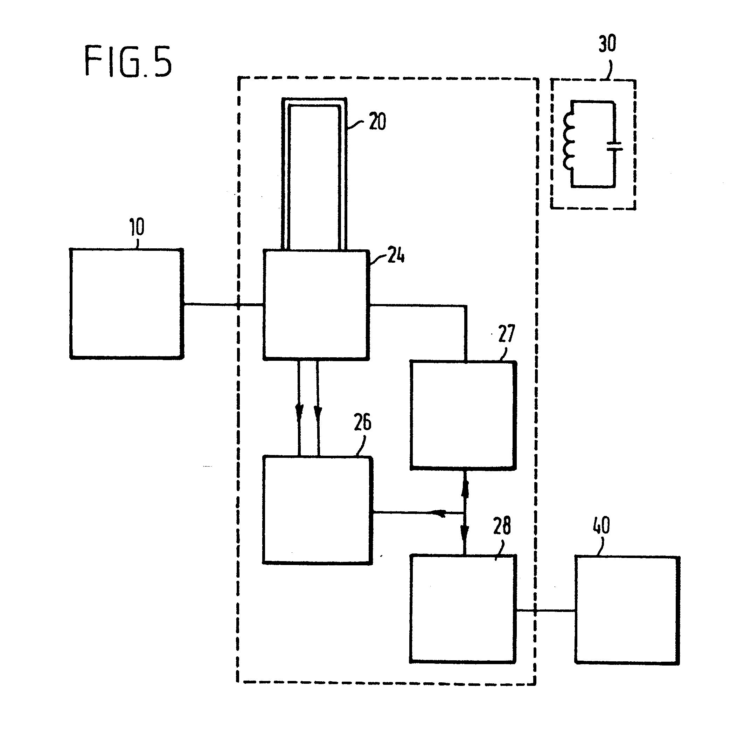

Accordingly, from the control voltage, the video-frequency pulse signal characteristic of the presence of a detection plate can be derived by means of a high-pass filter. Apparatus based on this is shown in Fig. 5. The control voltage produced by the phase measuring circuit is supplied to a high-pass filter 28. This filter must suppress the low-frequency signal components related to the sweep signal of the transmitter. The control voltage passed to circuit 24 is preferably stripped of the high-frequency signal components produced by the absorption pulse signal, by means of a low-pass filter 27, to prevent unnecessary feedback and hence, signal loss of the absorption pulse signal.

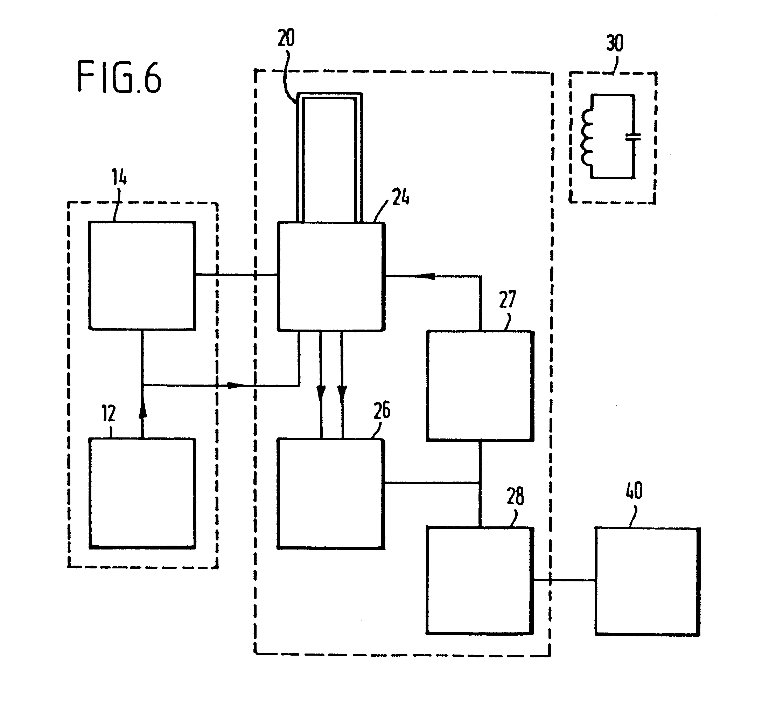

Fig.6 illustrates a combined solution. In it, the tuning circuit 24 for the transmitting/receiving coil is offered a forward control voltage from the wobble voltage generator 12. As a result, the tuning of the transmitting/ receiving circuit follows the carrier frequency. Furthermore, a phase measuring circuit 26 is provided. The output signal of the phase measuring circuit then no longer contains the sweep voltage. In the presence of a detection plate, in the interrogation field, however, the control voltage

0226239

does contain the above-described phase modulation. From this, via a high-pass filter 28, a pulse signal can be derived and supplied to receiver circuitry 40 for further processing. The feedback control voltage is then used to correct ambient influences on the attunement of the transmitting/receiving coil. The circuitry 40 various existing techniques can be used. The time-slot technique, as disclosed in Netherlands patent application no. 7513348, is applicable, but so is the technique disclosed in Netherlands patent application 8202951. In the latter, the signal from a detection plate is distinguished from spurious signals by means of a comparison of the levels of different frequency components in a discriminator filter device. These techniques are known per se and will therefore not be described in more detail herein.

## CLAIMS

1.      An electromagnetic detection system of the field disturbance type, in particular suitable for use as an electronic anti-shop-lifting system, comprising a transmitter/receiver including a transmitting/receiving circuit having a coil for generating an interrogation field in a zone to be guarded, and a sweep signal generator for periodically varying the frequency of the interrogation field within a pre-determined frequency range, the detection system further including a plurality of detection plates provided with at least one resonant circuit whose resonant frequency is within said frequency range, characterized in that the frequency tuning of the transmitting/receiving circuit is variable and that means are provided for causing the attunement of the transmitting/receiving circuit, in operation, to follow the varying frequency of the interrogation field in synchronism therewith.

2.      An electromagnetic detection system as claimed in claim 1, characterized in that the transmitting/receiving circuit comprises a controllable tuning circuit connected to the coil, which tuning circuit, in operation, receives control signals from the sweep signal generator.

3.      An electromagnetic detection system as claimed in claim 1, characterized by an auxiliary circuit which, in operation, continuously measures the difference in phase between the current in the transmitting/receiving circuit and the voltage across the transmitting/receiving circuit, and provides an output signal based on the instantaneously measured difference in phase, which output signal is supplied as a control signal to a controllable tuning circuit connected to said coil.

4.      An electromagnetic detection system as claimed in claim 1, characterized in that the transmitting/receiving circuit comprises a controllable tuning circuit connected to said coil and, in operation, receiving from said sweep signal generator first control signals for causing variation of the tuning of said transmitting/receiving circuit, said controllable tuning circuit being connected to an auxilary circuit which, in operation, continuously measures the difference in phase between the current in the transmitting/receiving circuit and provides output signals based on the instantaneously measured difference in phase.

5. An electromagnetic detection system as claimed in claim 4, characterized in that the output signals from said auxiliary circuit are supplied as second, correcting control signals to the controllable tuning circuit.

6. An electromagnetic detection system as claimed in any of claims 3, 4 and 5, characterized in that the output signals from the auxiliary circuit are supplied to a high-pass filter having an output terminal connected to a detection signal processor.

7. An electromagnetic detection system as claimed in any one of claims 3-6, characterized in that the output signals from the auxiliary circuit are supplied to a low-pass filter having an output connected to said controllable tuning circuit.

FIG.1

1/4

0226239

FIG.2

0226239

FIG.3

FIG.4

FIG.5

0226239

3/4

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 967 161 (LICHTBLAU) <br> * Column 12, lines 1-21; figure 15 * | 1,2 | G 08 B 13/24 |
| A | * Column 10, line 51 - column 11, line 31; figures 1,2 * | 3-7 | |

-----

TECHNICAL FIELDS SEARCHED (Int. Cl.4)

G 08 B

The present search report has been drawn up for all claims

| Place of search | Date of completion of the search | Examiner |
|---|---|---|
| THE HAGUE | 09-03-1987 | REEKMANS M.V. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82